# EUROPEAN PATENT SPECIFICATION

(11) **EP 3 216 825 B1**
(45) Date of publication and mention of the grant of the patent: **28.08.2019**
(21) Application number: 16425023.5
(22) Date of filing: 11.03.2016
(51) Int. Cl.: C08J 9/00, B29B 17/04, C03C 11/00, C08J 9/28, C03C 1/00

(54) **METHOD FOR RECYCLING WASTE MATERIAL**
VERFAHREN ZUR WIEDERVERWERTUNG VON ABFALLMATERIAL
PROCÉDÉ DE RECYCLAGE DE DÉCHETS

(43) Date of publication of application: 13.09.2017
(73) Proprietor: Universita'Degli Studi di Trieste, I-34127 Trieste (IT)
(72) Inventor: Caniato, Marco, 31015 Conegliano (Treviso) (IT); Travan, Andrea, 34134 Trieste (IT)
(74) Representative: Biggi, Cristina

(56) References cited:
- WO-A2-2012/166832
- US-A- 5 382 285

## Description

### TECHNICAL FIELD

The present invention relates to a method for recycling waste materials, such as for example flbreglass, glass fibres, and carbon fibres. The invention also relates to a composite material having a high degree of porosity obtainable from waste material by means of the method of the invention and the use of the composite material for applications involving sound-absorbance, sound-insulation and heat insulation.

### BACKGROUND OF THE INVENTION

Composite materials containing a thermosetting resin and fibres of another material, for example glass fibres and carbon fibres have revolutionised sectors of industry in terms of physical performances and possibilities of application. The demand for composite materials is experiencing rapid growth and global demand is destined to increase in the future. Since the demand for composite materials is growing it is clear that the question of the management of waste materials will become of prime importance for companies.

The disposal of manufactured products obtained from composite materials, in particular thermosetting, is becoming a problem and a cost for sectors, such as the aerospace, automobile sectors, as well as constructions and the nautical sector.

From the technical point of view, composite materials are difficult to recycle due to the heterogeneous nature of their composition, as they contain numerous ingredients. Among composite materials, the thermosetting ones obtained from a union of a reinforcing fibre (for example a glass fibre or carbon fibre) and a thermosetting polymeric matrix, are particularly problematic in terms of possibility of disposal and recycling. In fact, the polymeric matrix, which is usually an epoxy resin or a polyester resin, cannot be melted and remodelled with a different shape because the chemical nature of thermosetting resins does not permit it. Consequently, thermosetting composite materials are normally sent to waste dumps and, not being degradable, the cost for their disposal can be very high.

Recycling methods for composite materials have recently been developed, which are based on three general principles: 1) reduction of the material to powder and use thereof in new formulations; 2) combustion or pyrolysis of the material; and 3) chemical depolymerisation of the resinous matrix.

One of the most widely-available and used composite materials, for example in the production of sailing vessels, is fibreglass, obtained by a union of a thermosetting epoxy resin matrix with glass fibre. The discovery thereof completely revolutionised the mode of boat production; wood and metal were progressively eschewed and almost completely replaced by the new material. Glass fibres offer high mechanical resistance, while the polymeric matrix serves to distribute the stresses in a uniform manner. Its excellent resistance, elasticity, lightness, resistance to corrosion, low cost and ease of working and modelling make it perfect for boat-building.

However, for this material too there exist problems of disposal, due to the properties of the composite materials.

In recent years specialised companies have been set up to break up boats that have reached the end of their life cycle. The procedure begins with the de-assembly of the unit up to the smallest component. Everything recyclable (about 10%) is sent on to special centres, while the remaining part is sent on to waste disposal or incinerators.

At present treatment methods of fibreglass hulls are:
- non oxidising heat demolition (pyrolysis), by means of which Syngas can be obtained as well as solid residue (the glass fibres); this method however includes the use of very large quantities of heat energy for reaching the necessary temperatures;
- the reduction of the fibreglass into chips, the addition of a glue and the re-utilisation thereof in other products by means of hot-pressing or extrusion; this process has an energy consumption that is lower than the preceding one, but is only capable of recycling fragments of determined dimensions and not for example the powders which are produced during grinding.

As well as composite materials having a thermosetting matrix, glass powders from industrial waste are difficult to recycle. Industrial recuperation is what occurs when, in the dump, once the highest possible quantity of glass has been recuperated, there remains a thick and tiny powder for which a use other than elimination cannot be found. The difficulty of recycling glass powders is connected to the need to carry out a heat treatment at high temperature (typically 650-900°C) and to the use of foaming agents which release various types of toxic and damaging substances into the air.

The need for finding new recycling methods persists in the sector of composite materials and glass powders from industrial waste, which methods must be advantageous from the economic point of view, in the sense of a limited use of energy, and which must also have a low environmental impact.

US 5 382 285 discloses a porous foam obtainable by mixing polysaccharide, water and sawdust as an additive, gelling the dispersion and freeze-drying the gel.

WO 2012/166832 discloses porous materials by combining nanoclay with polysaccharide to form a dispersion, forming a gelled mixture, and freeze-drying to form a porous nanocomposite. The dispersion may further comprise cellulosic fibrous materials such as recycled cellulose fibers from cardboard and newsprint.

The present invention discloses a recycling method of waste materials, in particular of composite materials (preferably thermosetting) and glass waste product obtained from industrial working. The composite materials that are recyclable with the method of the invention are preferably: fibre glass and carbon fibre in a polymeric matrix. The method of the invention is very advantageous from the economic and environmental point of view as the whole process is carried out without the use of chemical solvents, without polluting emissions into the atmosphere, with only the use of water in a closed circuit (and therefore recycled and not wasted) and electrical current.

The method of the invention also enables producing innovative products having high levels of porosity which can be used in various sectors as sound and heat insulators.

### SUMMARY OF THE INVENTION

The present invention relates to a method for recycling waste materials, preferably composite materials or glass from industrial waste, comprising steps of:
1) reducing waste material to powder by grinding;
2) preparing a suspension of a polysaccharide as a crosslinking agent in water;
3) adding the powder obtained at point 1) to the suspension of point 2);
4) subjecting the mixture of point 3) to shaking up to formation of a hydrogel;
5) proceeding to freeze-drying of the hydrogel, obtaining a porous foam, wherein said waste material is a composite material or glass from industrial waste.

In an embodiment of the invention, when the waste material to be recycled is glass from industrial waste, the porous foam obtained in step 5) can be subjected to a sintering step for increasing the mechanical performance thereof.

On the other hand, when the waste material to be recycled is a composite material, and therefore has a polymeric matrix, instead of sintering, with the aim of increasing the mechanical performance thereof, at point 3) a bonding agent, for example polyethylene, can be added.

In a preferred embodiment, during step 5), freeze-drying, the mixture is subjected to an ultrasound treatment with the aim of being able to regulate the dimensions of the porous cells and govern the process of freezing and subsequent elimination of the water in a controlled and not random way. In fact, the use of ultrasound provides a very precise control on these parameters.

The invention also relates to a porous foam obtainable with the recycling method of the invention. If the freeze-drying and the sintering are done in a mould, for example having a panel shape, the foam obtained on termination of the process of the method takes the shape of the mould used and therefore becomes a manufactured product usable in various sectors, for example in the construction sector, with sound-absorbent, sound-insulating and heat-insulating properties. Other sectors for use of the manufactured product of the invention are: the *automotive* sector as screens for the engine and sound insulation of the cabin; the naval industry: internally of *sandwich* structures and in replacement for rock and glass wool internally of partition walls and partitions for heat and sound insulation; the industrial sector: internally of industrial machines and panelling in general; the transport sector: internally of sound-absorbent barriers and road or rail barriers.

### BRIEF DESCRIPTION OF THE FIGURES

Figure 1 shows the graph generated by the measuring of the particle size of the powder obtained in step 1) of the method of the invention; the x axis reports the diameter of the particles of powder and the y axis shows the cumulative percentage thereof;
Figure 2 shows the graph of the sound-absorbance test carried out on the porous foams V10 and V20 obtained with the method of the invention (without sintering) in comparison with a basalt fibre panel;
Figure 3 shows the force-displacement graph reporting the results of the compression test carried out on 4 test pieces of porous foam V10 obtained with the method of the invention.

### DETAILED DESCRIPTION OF THE INVENTION

The present invention relates to a method for recycling waste materials, preferably composite materials or glass from industrial waste, comprising steps of:
1) reducing waste material to powder by grinding;
2) preparing a suspension of a polysaccharide as a crosslinking agent in water;
3) adding the powder obtained at point 1) to the suspension of point 2);
4) subjecting the mixture of point 3) to shaking up to formation of a hydrogel;
5) proceeding to freeze-drying of the hydrogel, obtaining a porous foam, wherein said waste material is a composite material or glass from industrial waste.

The composite materials that can be recycled with the method of the invention are preferably: fibreglass and carbon fibre in a polymeric matrix and composite materials self-reinforced from consolidation processes.

Fibreglass is definable as a plastic composite material in which the glass fibre is reinforced with thermosetting resins of the polyester resin, vinyl ester resin and epoxy resin types.

The carbon fibres dispersed in a thermosetting matrix are a composite material commonly known by the term "*carbon fibre reinforced polymer (CFRP)*". This composite material is constituted by carbon fibres, possibly in a mixture with other fibres, for example aramid fibres, dispersed in a polymeric matrix of epoxy resin, polyester, vinyl ester or nylon.

Self-reinforced composite materials from consolidation processes are those composite materials where the same polymer forms both the reinforcement and the matrix. This also includes composite materials where the reinforcement and the matrix are different polymers but belong to the same family of polymers.

Glass from industrial waste originates from any glassy refuse.

The waste material is subjected to a first grinding step so as to reduce it to powder.

The grinding step is carried out preferably with a disc grinder.

The quantity of powder from waste material in water is comprised between 5 and 20 mg/ml.

At the same time as the grinding operation, a suspension of the polysaccharide as a crosslinking agent in water is prepared. By "crosslinking agent" is meant a polymer able to form aqueous gels.

The crosslinking agent is preferably a "lyotropic" agent (i.e. able to form a gel in the presence of an appropriate ion) or a "thermotropic" agent (i.e. able to form aqueous gels on a varying of the temperature).

The crosslinking agent usable for the purposes of the invention is advantageously a biodegradable polymer.

Lyotropic polysaccharides are selected from among: alginate, pectate, carrageenan, scleroglucan (which form gels in the presence of calcium ions or potassium ions or borate ions).

Thermotropic polysaccharides are selected from among: agarose, gellan and carrageenan and xanthan (carrageenan is both a lyotropic and a thermotropic agent).

The polysaccharide crosslinking agents are biodegradable, are soluble in aqueous solutions and thus enable avoiding the use of organic solvents.

The concentration of the crosslinking agent in water is comprised between 0.5 and 5% p/v, preferably between 1 and 2% p/v.

In a case where a lyotropic crosslinking agent is used, step 3) also includes the addition of a source of ions which help the formation of the hydrogel. The addition of a source of ions is optional and can be left aside in a case where the crosslinking agent is of the "thermotropic" type. In the case of a "thermotropic" crosslinking agent, in order to activate the formation of the hydrogel, after heating to dissolve the crosslinking agent, it is necessary to appropriately vary the temperature, for example taking it to below 40°C.

The ion source can be a source of calcium ions, preferably selected from between: calcium carbonate or calcium chloride, in a case where the crosslinking agent is, for example, alginate. Alternatively, it can be a source of potassium ions, preferably chosen from between potassium chloride and potassium bromide in a case where the crosslinking agent is, for example, carrageenan. For scleroglucan borate ions can be used, obtained starting from boric acid.

The source of ions is added to the aqueous suspension in quantities of 10-80 mM.

An organic acid can also be added in step 3), preferably glucono delta-lactone (GDL), preferably added in double quantities with respect to the ion source.
The organic acid serves to acidify the solution, making the calcium or potassium ions or borate ions in solution gradually available. The calcium or potassium or borate ions enable formation of joining points between the macromolecules of the crosslinking agent (egg-box), forming cells in which the water is trapped. The powders remain trapped internally of the hydrogel.

The hydrogel obtained in this way is subjected to freeze-drying. Freeze-drying is a process comprising two physical transformations, deep-freezing and sublimation. During the first step the water forms crystals of ice which deform the structure, giving it a certain directionality. With the following sublimation the water is directly extracted as steam, heating it to a pressure much below 6.10 mbar (or 4.58 mmHg), corresponding to the triple point of the water. The extracted water vapour is condensed on cold serpentines and the water is recycled.
The times vary according to the size of the sample, the quantity of water and the raw materials. For the aims of the invention, the freezing and sublimating times are comprised between about 24 h and 48 h.
The freeze-drying leads to the formation of a porous foam in which the powders are distributed along the crosslinks created by the crosslinking agent and the pores are formed by the steam extracted from the initial hydrogel.
In a case where the waste material to be recycled is glass from industrial waste, the porous foam can be subjected to a heat treatment of sintering for improving the mechanical resistance thereof. The sintering is preferably carried out at a temperature of 400-650 ºC, preferably 500-600 ºC. The sintering is carried out for a time comprised between 30 minutes and 1 hour.
The cooling following the sintering is preferably carried out internally of the sintering oven.
In a case where the waste material to be recycled is a composite material having a polymeric matrix, in order to increase the mechanical resistance, instead of sintering, in the mixture of step 3) a bonding agent of a naturally- or synthetically-derived polymeric material is also added. The bonding agent is preferably polyethylene.

In a preferred embodiment, the method of the invention also comprises an ultrasound treatment step which is made during the step of freeze-drying with the aim of lowering the freezing time and the successive freeze-drying, reducing the metastable zones internally of the ice, for controlling the dimension of the crystals and for controlling the final volume of the frozen solution. The advantages are clear: process control and choice of the production and process parameters.

A further objective of the invention is a porous foam obtainable with the recycling method of the invention.
The porous foam has sound-absorbent, sound-insulation and heat insulation properties.
The porous foam can be obtained in the desired shape by pouring the hydrogel of point 4) into a mould of the desired shape and carrying out freeze-drying directly in the mould. In this way a porous manufactured product is obtained of the desired shape which can be used for various applications in various sectors, for example in the construction sector as sound-absorbent, sound-insulating and heat-insulating panels.
Other sectors of use of the manufactured product of the invention are: the *automotive* sector as screens for the engine and sound insulation of the cabin; the naval industry: internally of *sandwich* structures and in replacement for rock and glass wool internally of partition walls and partitions for heat and sound insulation; the industrial sector: internally of industrial machines and panelling in general; the transport sector: internally of sound-absorbent barriers and road or rail barriers.
A further object of the invention is the use of the porous foam for preparing porous manufactured products, preferably having a panel shape. The panel is preferably used in the construction sector as a heat-insulating, sound-insulating and sound-absorbent panel.

### EXAMPLES

The recycling materials used are: glass powder, fibreglass powder and carbon fibre powder in resin matrix.
At the experimental level the glass used is laboratory beaker glass and the powder is therefore a mixture of borosilicate glass and pyrex glass.
The fibreglass originated from panels for naval use and was ground with the addition of glass fragments for facilitating the operation.
For carbon-fibre based foams CFRP panels were ground.
For grinding the raw materials, a Herzog disc grinder was used with iron grinding jars.
The foam production process includes initial forming of a powder-and-alginate based gel (a copolymer extracted from brown algae which absorbs water very quickly) with concentrations expressed in % p/V, CaCO₃ and glucono delta-lactone (GDL) with concentrations expressed in mM..
Petri dishes were used for the sample moulds.
For the formation of the gel the alginate powder is dissolved in water, the recycling material powder is added (glass/fibreglass/carbon fibre) and lastly the reagents for gelification are added, all while being mixed by the magnetic stirrer inside beakers.
For a Petri dish having a diameter of 4.1 cm, the volume of mixture is 52.8 ml and therefore on the basis of the quantity of recycling powder used, the water required for reaching that volume is added.
Glass samples were prepared with weight ratio of the powder to the volume of gel of 5, 10 and 20 mg/ml (identified as V5, V10 and V20 respectively), samples of fibreglass with weight ratio of the powder to the volume of gel of 5, 10, 20 mg/ml (identified as VR5 and VR10 respectively) and samples of CFRP with the same concentrations.
For each percentage of fixed powder the concentration of alginate was varied: starting from 1%p/v and reaching 1.7%p/v.
The gels obtained were subjected to a process of freeze-drying (the freeze-dryer used is an Alpha 1-2 LD Plus with a power of 1.2 kW), for 24-48h.
The glass powder based foams were subjected to a sintering process with the intention of improving the mechanical resistance thereof.
The heat cycles were set on the basis of the results of the melting test which was carried out on the glass powder.
After the first partial-melting results of the foam obtained with ramps calculated within the temperature range between sintering and softening, it was decided to work at lower temperatures, at the start of the setting of the sample. 17 cycles in all were tested, varying both the maximum temperature reached and the plateau times.

The best result is the one reported in table 1.

**Table 1 - Sintering heat cycle.**

| **Heating velocity [K/min]** | **T maximum [°C]** | **Permanence at Tₘₐₓ [min]** | **Cooling velocity [K/min]** |
|---|---|---|---|
| 10 | 630 | 30 | In the oven |

### Particle size of the powders

To determinate the particle size of the glass powder used for producing the foam, tests were carried out with a Master Size 2000E laser particle size analyser from Malvern Instruments.

For the analysis, a water and glass powder mixture was prepared the concentration of which must be comprised between 10 and 20 per cent in weight of powder over the weight of the suspending liquid (if the concentration of particles is too low the laser cannot strike them, while if it is too high the particles themselves disturb the laser signal).

The particle size technique, using laser diffraction, is based on the fact that the particles illuminated by a laser beam diffuse the light at an angle that is correlated to the dimension thereof. On reducing the particle size the scattering angle (diffusion) observed increases logarithmically. The scattering intensity also depends on the size of the particles and diminishes in relation to the surface of the transversal section of the particle. Sensors detect the quantity of light diffused at the various angles, thus identifying the particles present at the various dimensions. The data is processed on the basis of the Mie Theory: it provides an exact solution to the problem, based on the refraction indices of the particles (for the tests carried out the flint glass index was used) and the dispersion medium (in the present case water), taking account of the fact that the particle is transparent or opaque and that the absorbance of the particles influences the scattering signal due to the refraction of the light internally of the particles (this is particularly important for particles having a smaller than 50 micron diameter).

Table 2 reports the data obtained by taking the mean of the five tests carried out on the glass powder.

**Table 2 - Mean data relative to 5 particle size tests.**

| **diameter [µm]** | **% cumulative** | **diameter [µm]** | **% cumulative** | **diameter [µm]** | **% cumulative** |
|---|---|---|---|---|---|
| 0.71 | 0.00 | 2.00 | 6.24 | 28.25 | 64.93 |
| 0.80 | 0.03 | 2.24 | 7.86 | 31.70 | 67.29 |
| 0.89 | 0.16 | 2.52 | 9.66 | 35.57 | 69.59 |
| 1.00 | 0.46 | 2.83 | 11.63 | 39.91 | 71.84 |
| 1.12 | 0.96 | 3.17 | 13.78 | 44.77 | 74.05 |
| 1.26 | 1.63 | 17.83 | 54.92 | 50.24 | 76.23 |
| 1.42 | 2.50 | 20.00 | 57.50 | 6.37 | 78.38 |
| 1.59 | 3.56 | 22.44 | 60.04 | 63.25 | 80.52 |
| 1.78 | 4.81 | 25.18 | 62.51 | 70.96 | 82.66 |

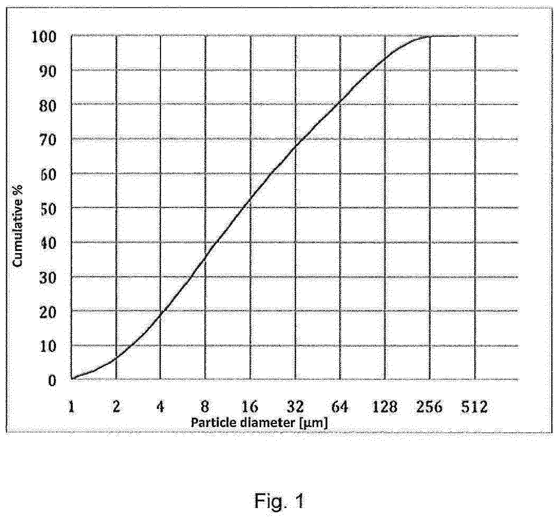

Figure 1 reports the distribution of the particle size in logarithmic scale.

### Sound absorbance test

For sound absorbance tests a 45 mm diameter Kundt Tube was used, essentially constituted by a tube having at an end thereof a speaker generating a plane and progressive wave at all frequencies (from 20 to 4000 Hz) and at another end thereof the sample to be tested. The progressive wave strikes perpendicularly on the sample (linc) and is divided into two parts following the impact on the sample:
- lass, the intensity absorbed by the sample;
- Irif, the intensity reflected by the sample.

Using two microphones inserted in the tube it is possible to detect first the intensity of the incident wave and then the intensity of the wave reflected by the sample; the absorbed intensity is calculated from the difference. The absorption coefficient is defined as α = Iₐₛₛ/I_{inc}.

The sound absorption tests were carried out on non-heat treated foam discs having a thickness of 7 mm; table 3 reports the best results obtained. As a reference the sound absorption values relative to a basal fibre panel were taken.

**Table 3 - Results of the sound absorption test carried out on the non-sintered foam samples V10 and V20 and on a basalt fibre panel**

| | **α** | | |
|---|---|---|---|
| **Hz** | **basalt fibre panel** | **foam V10** | **foam V20** |
| 63 | 0.063 | -0.041 | 0.035 |
| 80 | 0.013 | -0.005 | 0.001 |
| 100 | 0.008 | 0.014 | 0.005 |
| 125 | 0.004 | 0.003 | 0.004 |
| 160 | 0.006 | 0.003 | 0.007 |
| 200 | 0.009 | 0.002 | 0.008 |
| 250 | 0.015 | 0.008 | 0.016 |
| 315 | 0.024 | 0.015 | 0.029 |
| 400 | 0.043 | 0.028 | 0.049 |
| 500 | 0.063 | 0.035 | 0.082 |
| 630 | 0.081 | 0.05 | 0.116 |
| 800 | 0.118 | 0.078 | 0.182 |
| 1000 | 0.167 | 0.118 | 0.271 |
| 1250 | 0.234 | 0.197 | 0.411 |
| 1600 | 0.332 | 0.363 | 0.594 |
| 2000 | 0.405 | 0.598 | 0.732 |
| 2500 | 0.543 | 0.832 | 0.781 |
| 3150 | 0.703 | 0.899 | 0.773 |
| 4000 | 0.841 | 0.901 | 0.825 |

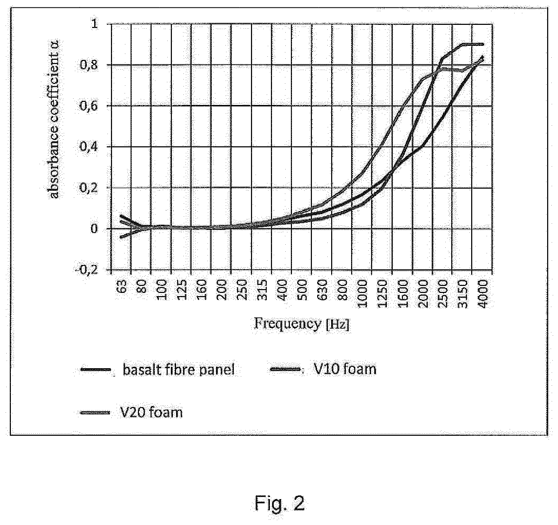

Figure 2 reports the comparison graph of the results obtained.

### Resistance to compression

The compression resistance tests have for now only been carried out on the glass foam V10 with an alginate concentration of 1%p/v.

The uniaxial compression tests were carried out using the Universal Testing Machine (Mecmesin Multitest 2,5-i) on pre-sintering sample cylinders having a diameter of 20 mm and a height of 8 mm. The compression velocity used was 6 mm/min. The compression module was calculated in the deformation portion 0.03-0.08 mm/mm. 4 replicates were used for the tests, for which the mean values and standard deviations are reported.

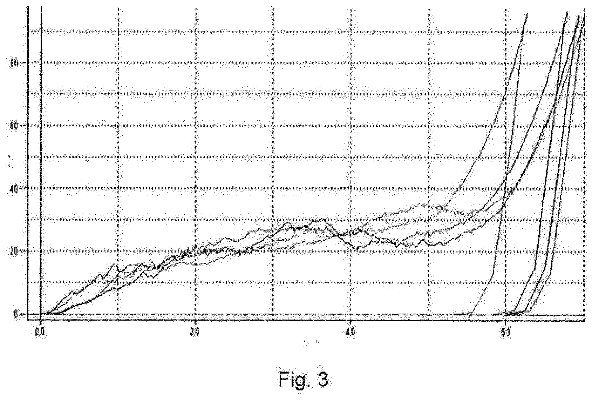

The force-displacement curves of the analysed samples are reported in figure 3.

The stress-strain curves obtained considering the geometry of the samples led to the calculation of the following compression module value of the foam: Ec= 327 ± 88 kPa.

The samples having a higher concentration of powder and alginate were significantly more resistant to the touch.

## Claims

1. A method for recycling waste material, comprising steps of:
1) reducing waste material to powder by grinding;
2) preparing a suspension of a polysaccharide as a crosslinking agent in water;
3) adding to the suspension of point 2) the powder obtained at point 1);
4) subjecting the mixture of point 3) to shaking up to formation of a hydrogel;
5) proceeding to freeze-drying of the hydrogel, obtaining a porous foam, wherein said waste material is a composite material or glass from industrial waste.

2. The method according to claim 1, further comprising a step 6) of sintering the porous foam in a case in which the recyclable material is glass from industrial waste.

3. The method according to claim 1, wherein when the waste material is a composite material, in step 3) a bonding agent, preferably polyethylene, is added.

4. The method according to claim 1, wherein said composite material is fibreglass, carbon fibre in a polymer matrix or a composite material self-reinforced by a consolidation process.

5. The method according to any one of claims from 1 to 4, wherein said crosslinking agent is selected from alginate, pectate, carrageenan, agarose, gellan, scleroglucan and xanthan.

6. The method according to any one of claims from 1 to 5, wherein said crosslinking agent is used in a concentration comprised between 0.5 and 5% p/v, preferably between 1 and 2% p/v.

7. The method according to any one of claims from 1 to 6, wherein when the cross-linking agent is a lyotropic cross-linking agent, in step 3) a source of ions is added.

8. The method according to claim 7, wherein said source of ions is a source of calcium ions preferably selected from between: calcium carbonate and calcium chloride, or is a source of potassium ions selected from between potassium chloride and potassium bromide, or is a source of borate ions, preferably obtained from boric acid.

9. The method according to any one of claims from 1 to 8, wherein in step 3) an organic acid is also added, preferably glucono delta-lactone (GDL).

10. A porous foam obtainable from the method according to any one of the preceding claims from 1 to 9.

11. A sound-absorbent, sound-insulating and heat-insulating panel obtainable from the foam according to claim 10.

## Patentansprüche

1. Verfahren zur Wiederverwendung von Abfallmaterial, umfassend die Schritte:
1) Reduzieren des Abfallmaterials zu Pulver durch Mahlen;
2) Vorbereiten einer Suspension aus einem Polysaccharids als Vernetzungsmittel in Wasser;
3) Zusetzen des unter Punkt 1) erhaltenen Pulvers zu der Suspension von Punkt 2);
4) Schütteln der Mischung von Punkt 3) bis zur Bildung eines Hydrogels;
5) Gefriertrocknen des Hydrogels, wobei ein poröser Schaum erhalten wird, wobei das Abfallmaterial ein Verbundmaterial oder Glas aus Industrieabfall ist.

2. Verfahren nach Anspruch 1, umfassend zudem einen Schritt 6) zum Sintern des porösen Schaums in einem Fall, in dem das wiederverwendare Material Glas aus Industrieabfall ist.

3. Verfahren nach Anspruch 1, wobei, wenn das Abfallmaterial ein Verbundmaterial ist, in Schritt 3) ein Bindemittel, vorzugsweise Polyethylen, zugesetzt wird.

4. Verfahren nach Anspruch 1, wobei das Verbundmaterial Glasfaser, Kohlenstofffaser in einer Polymermatrix oder ein Verbundmaterial ist, das durch einen Verfestigungsprozess selbstverstärkt ist.

5. Verfahren nach einem der Ansprüche 1 bis 4, wobei das Vernetzungsmittel aus Alginat, Pektat, Carrageenan, Agarose, Gellan, Skleroglucan und Xanthan ausgewählt ist.

6. Verfahren nach einem der Ansprüche 1 bis 5, wobei das Vernetzungsmittel in einer Konzentration zwischen 0,5 und 5% p/v, vorzugsweise zwischen 1 und 2% p/v genutzt wird.

7. Verfahren nach einem der Ansprüche 1 bis 6, wobei, wenn das Vernetzungsmittel ein lyotropes Vernetzungsmittel ist, in Schritt 3) eine Ionenquelle zugesetzt wird.

8. Verfahren nach Anspruch 7, wobei die Ionenquelle eine Calciumionenquelle ist, die vorzugsweise ausgewählt ist aus: Calciumcarbonat und Calciumchlorid, oder eine Kaliumionenquelle ist, die aus Kaliumchlorid und Kaliumbromid ausgewählt ist, oder eine Borationenquelle, vorzugsweise erhalten aus Borsäure, ist.

9. Verfahren nach einem der Ansprüche 1 bis 8, wobei in Schritt 3) auch eine organische Säure, vorzugsweise Glucono-Delta-Lacton (GDL), zugesetzt wird.

10. Poröser Schaum, erhältlich nach dem Verfahren nach einem der vorhergehenden Ansprüche 1 bis 9.

11. Schallabsorbierende, schallisolierende und wärmeisolierende Platte, erhältlich aus dem Schaum nach Anspruch 10.

## Revendications

1. Procédé de recyclage de déchets, comprenant les étapes de :
1) réduire en poudre les déchets par broyage ;
2) préparer une suspension d'un polysaccharide comme un agent de réticulation dans l'eau ;
3) ajouter à la suspension du point 2) la poudre obtenue au point 1) ;
4) agiter le mélange du point 3) jusqu'à la formation d'un hydrogel ;
5) procéder à la lyophilisation de l'hydrogel pour obtenir une mousse poreuse, dans lequel lesdits déchets sont une matière composite ou du verre provenant de déchets industriels.

2. Procédé selon la revendication 1, comprenant de plus une étape 6) consistant à fritter la mousse poreuse dans un cas où la matière recyclable est du verre provenant de déchets industriel.

3. Procédé selon la revendication 1, dans lequel lorsque les déchets sont une matière composite, un liant, de préférence du polyéthylène, est ajouté à l'étape 3).

4. Procédé selon la revendication 1, dans lequel ladite matière composite est de la fibre de verre, de la fibre de carbone dans une matrice polymère ou un matériau composite auto-renforcé par un processus de consolidation.

5. Procédé selon l'une quelconque des revendications de 1 à 4, dans lequel ledit agent de réticulation est sélectionné à partir d'alginate, de pectate, de carraghénine, d'agarose, de gomme gellane, de scléroglucane et de xanthan.

6. Procédé selon l'une quelconque des revendications de 1 à 5, dans lequel ledit agent de réticulation est utilisé dans une concentration comprise entre 0,5 et 5 % p/v, de préférence entre 1 et 2 % p/v.

7. Procédé selon l'une quelconque des revendications de 1 à 6, dans lequel lorsque l'agent de réticulation est un agent de réticulation lyotrope, une source d'ions est ajoutée à l'étape 3).

8. Procédé selon la revendication 7, dans lequel ladite source d'ions est une source d'ions calcium de préférence choisie à partir de : carbonate de calcium et de chlorure de calcium, ou est une source d'ions potassium choisie à partir de chlorure de potassium et de bromure de potassium, ou est une source d'ions borate, de préférence obtenue à partir d'acide borique.

9. Procédé selon l'une quelconque des revendications de 1 à 8, dans lequel un acide organique est aussi ajouté à l'étape 3), de préférence de la glucono delta-lactone (GDL).

10. Mousse poreuse pouvant être obtenue à partir du procédé selon l'une quelconque des revendications précédentes de 1 à 9.

11. Panneau absorbant, insonorisant et calorifuge pouvant être obtenu à partir de la mousse selon la revendication 10.
